(19) Europäisches Patentamt
European Patent Office
Office européen des brevets

(11) EP 2 958 959 B1

(12) **FASCICULE DE BREVET EUROPEEN**

(45) Date de publication et mention de la délivrance du brevet:
**23.11.2016 Bulletin 2016/47**

(21) Numéro de dépôt: **14713152.8**

(22) Date de dépôt: **18.02.2014**

(51) Int Cl.:
***C08K 5/521*** (2006.01) ***C08K 9/04*** (2006.01)

(86) Numéro de dépôt international:
**PCT/FR2014/050333**

(87) Numéro de publication internationale:
**WO 2014/128398 (28.08.2014 Gazette 2014/35)**

(54) **AGENT D'HYDROPHOBISATION ET UTILISATION POUR TRAITER EN SURFACE DES PARTICULES DE MATIERE MINERALE**

HYDROPHOBISIERUNGSMITTEL UND VERWENDUNG DAVON ZUR OBERFLÄCHENBEHANDLUNG VON PARTIKELN ANORGANISCHER STOFFE

HYDROPHOBISATION AGENT AND USE THEREOF FOR THE SURFACE TREATMENT OF PARTICLES OF INORGANIC MATTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2013 FR 1351542**
**01.03.2013 US 201361771101 P**

(43) Date de publication de la demande:
**30.12.2015 Bulletin 2015/53**

(73) Titulaire: **COATEX**
**69730 Genay (FR)**

(72) Inventeurs:
- **SUAU, Jean-Marc**
**F-69480 Lucenay (FR)**
- **MONGOIN, Jacques**
**F-69650 Quincieux (FR)**
- **JACQUEMET, Christian**
**F-69005 France (FR)**

(74) Mandataire: **Balmefrezol, Ludovic Francis Pierre et al**
**Coatex SAS**
**35, rue Ampère**
**69730 Genay (FR)**

(56) Documents cités:
**EP-B1- 0 401 871 US-A- 3 341 343**
**US-A- 4 115 483**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 958 959 B1

**Description**

La présente invention se rapporte à un nouvel agent d'hydrophobisation de particules de matière minérale et à ses diverses utilisations pour traiter en surface des particules de matière minérale.

De manière générale, les particules de matière minérale sont utilisées comme charge inorganique dans une variété d'applications et notamment dans des compositions de film thermoplastique.

Parmi les différentes charges minérales utilisées, le carbonate de calcium ($CaCO_3$) est l'une des plus courantes, principalement en raison de sa disponibilité sous une forme facilement utilisable et de faible coût. Toutefois, le carbonate de calcium présente une surface hydrophile ce qui le rend incompatible avec les polymères hydrophobes, par exemple, polyéthylène (PE) et le polypropylène (PP). Pour résoudre ce problème technique, la surface du carbonate de calcium est rendue hydrophobe par utilisation de divers modificateurs de surface. Parmi ceux-ci, l'acide stéarique est le modificateur de surface (également appelé agent d'hydrophobisation ou agent antagonisant) le plus couramment utilisé, notamment en raison de son faible coût et de son origine. Notamment, il est connu du document WO 95/17441 (ECC International Inc) de recouvrir les charges de carbonate particulaire avec un ou plusieurs acides gras ayant de 12 à 20 atomes de carbones dans le but d'augmenter la proportion de charges minérales dans les granules ou pellets thermoplastiques.

D'autres documents d'art antérieur proposent d'utiliser l'acide stéarique (ou un de ses dérivés) pour traiter le carbonate de calcium dans le but de résoudre le problème technique de la susceptibilité des charges minérales à l'absorption de l'humidité de surface (« moisture pick-up » en anglais).

Le document US 5,008,296 (Hercules Inc.) décrit une méthode pour réduire le taux d'humidité d'une composition de film respirable, comprenant de 0,1 à 3 % en poids de stéarate de calcium.

Le document EP 0 998 522 (Imerys Minerals Limited) notamment décrit le traitement de matières particulaires inorganiques avec un agent de traitement de surface hydrophobisant, les matières obtenues présentant un taux d'humidité réduit et une susceptibilité basse à l'absorption de l'humidité de surface. De telles matières particulaires sont utilisées dans des articles thermoplastiques du type film respirant. L'agent de traitement de surface hydrophobisant est du type acide carboxylique aliphatique ayant de 10 à 24 atomes de carbone, tel que l'acide stéarique.

D'autres documents encore, par exemple US 4,698,372, décrivent l'utilisation de l'acide stéarique comme agent hydrophobisant de manière notamment à réduire la tension de surface de la charge minérale.

D'autres documents, par exemple US 4,350,655 (Biax Filmerfilm) décrivent des procédés de préparations de film synthétique consistant à mélanger un polymère thermoplastique avec une charge inorganique sur laquelle a été déposé une couche d'un ester d'acide gras comportant un atome de titane ou de silice.

Le document EP 2 546 410 (Omya Development AG) décrit un procédé comprenant une étape d'hydrophobisation de particules de carbonate de calcium dans le but de réduire la poix (« pitch » en anglais) générée lors de la préparation de la pâte à papier. L'agent d'hydrophobisation est de préférence l'acide stéarique.

L'article de Supaphol et al. (Colloids and surfaces, A 275 (2006) 114-125) indique, de manière très générale, que la surface de la calcite peut être rendue « organophile » par l'utilisation de modificateurs de surface tels que les silanes, les titanates, les phosphates et l'acide stéarique. Aucun détail supplémentaire n'est donné quant à ces modificateurs de surface.

Il est connu des documents FR 2 582 310 et FR 2 602 236 (Pluess Staufer AG) d'utiliser un agent fluidifiant de polymères polyoléfiniques comme constituant d'agrégats thermoplastiques à haute teneur en matière minérale pulvérulente. Cet agent fluidifiant est un phosphate de formule :

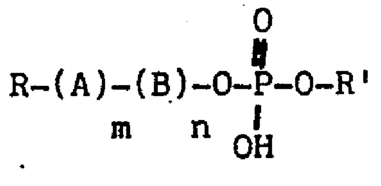

dans laquelle (A) est l'oxyde d'éthylène, (B) est l'oxyde de propylène, avec $0 \leq (m + n) \leq 24$, R est choisi dans le groupe formé par les radicaux alkyls linéaires ou non, saturés ou insaturés, les radicaux aryl, les hétérocycles saturés ou non, contenant de 5 à 28 atomes de carbone et de préférence de 8 à 24 atomes de carbone, les stéroïdes, et R' est choisi dans le groupe constitue par l'hydrogène, une chaîne carbonée contenant de 1 à 4 atomes de carbone et l'un des radicaux appartenant au groupe défini pour R.

Les documents FR 2 671 555 et FR 2 671 556 (COATEX) concernent un agent dispersant de charges minérales dans les résines thermodurcissables, de type organo-phosphoré, avec des chaînes oxyalkylées (oxyde d'éthylène et/ou oxyde de propylène) substituées par un groupe aryle ramifié ou non. En outre, cet agent n'est pas utilisé dans ces demandes de brevet comme agent d'hydrophobisation de particules de charge minérale pulvérulente.

EP 0401871 B1 divulgue le traitement des particules d'un matière minérale, par exemple le trihydrate d'aluminium, le titanate de baryum ou le carbonate de calcium avec un agent pour améliorer la résistance au choc comprenant un ester trialkyl phosphorique.

Un objet de la présente invention est de proposer un composé qui permette de rendre hydrophobe des particules de matière minérale qui doivent être formulées avec des polymères hydrophobes, par exemple le polyéthylène (PE) et le polypropylène (PP).

Un autre objet de la présente invention est de proposer un tel composé qui permette de préparer des compositions (par exemple thermoplastiques) qui présentent une concentration en matière minérale élevée, qui soient homogènes et qui présentent un indice de fluidité amélioré par rapport aux agents d'hydrophobisation actuellement disponibles.

Ces objectifs sont atteints au moyen d'un agent d'hydrophobisation selon la présente invention.

Il est à noter que dans le cadre de la présente invention, les différents modes de réalisation décrits peuvent être combinés.

Ainsi, un objet de la présente invention consiste en un agent d'hydrophobisation de particules de matière minérale, comprenant un mélange des composés de formule (I) et (II) suivants :

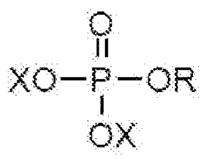

(I)

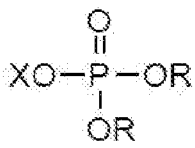

(II)

dans lesquelles :

R représente $C_nH_{2n+1}$ où n représente un nombre entier qui varie entre 6 et 40, le groupe $C_nH_{2n+1}$ étant ramifié, éventuellement cyclique, non aromatique,
X représente H ou M, et
M représente un cation monovalent, divalent ou trivalent.

Ainsi, le groupe R représente une chaîne carbonée ramifiée qui comporte entre 6 et 40 atomes de carbone (les bornes, à savoir 6 atomes de carbone et 40 atomes de carbone, étant comprises dans l'intervalle). Par «ramifié », il faut comprendre, par opposition à une chaîne linéaire, une chaîne carbonée qui comporte au moins un groupe substituant sur le côté. On dit que le groupe R comporte une chaîne principale (nombre de carbone le plus grand) et au moins une ramification (la longueur de la chaîne est inférieure à celle de la chaîne principale). Dans le cadre de la présente invention, le groupe R peut comporter une ramification, deux ramifications ou plus.

Selon l'invention, le groupe R peut être acyclique ou cyclique.
Lorsqu'il est cyclique, le groupe R comporte également, indépendamment des atomes de carbone constitutifs du cycle, une chaîne carbonée ramifiée.

Selon l'invention, le groupe R n'est pas oxyalkylé. Notamment, il ne comporte pas de motifs d'oxyde d'éthylène (OE) ou de motifs d'oxyde de propylène (PO).

Selon un mode de réalisation de l'invention, le groupe R est ramifié, acyclique, non aromatique, et de type 2-alkyl-alkyl.

Selon un autre mode de réalisation de l'invention, le groupe R est sélectionné dans le groupe consistant en le 2-butyloctanyl (n représente 12 atomes de carbone, R est ramifié, acyclique et non aromatique), le 2-hexyldecanyl (n représente 16 atomes de carbone, R est ramifié, acyclique et non aromatique), le 2-octyldodecanyl (n représente 20 atomes de carbone, R est ramifié, acyclique et non aromatique), le 2-decyltetradecanyl (n représente 24 atomes de carbone, R est ramifié, acyclique et non aromatique), le 2-dodecylhexadecanyl (n représente 28 atomes de carbone, R est ramifié, acyclique et non aromatique) et le 2-tetradecyloctadecanyl (n représente 32 atomes de carbone, R est ramifié, acyclique et non aromatique).

Selon un mode de réalisation, l'agent d'hydrophobisation est tel que le ratio molaire entre le composé de formule (I) et le composé de formule (II) varie entre 1:100 et 10:1, par exemple entre 1:20 à 2:1 ou entre 1:10 à 1:1.

Selon un mode de réalisation de la présente invention, le nombre n du groupement R dans les formules (I) et (II) varie entre 12 et 32 (les bornes, à savoir 12 atomes de carbone et 32 atomes de carbone, étant comprises dans l'intervalle).

L'agent d'hydrophobisation selon la présente invention peut se trouver sous forme liquide ou sous forme solide à température ambiante.

L'agent d'hydrophobisation peut se trouver sous forme dissoute dans un solvant (par exemple alcool, cétone,

ester, éther). Il peut alternativement se trouver sous forme non solubilisée, par exemple sous forme d'émulsion.

Selon un mode de réalisation, l'agent d'hydrophobisation se trouve à l'état liquide à température ambiante.

Selon un autre mode de réalisation, l'agent d'hydrophobisation se trouve à l'état solide à température ambiante. Ainsi, s'il est solide à température ambiante, l'agent d'hydrophobisation est chauffé à une température telle à opérer le changement de phase solide-liquide. L'agent d'hydrophobisation peut être chauffé à une température d'au moins 50°C, par exemple d'au moins 75°C, ou comprise entre 50 et 120°C ou entre 70 et 100°C. On obtient ainsi ledit agent d'hydrophobisation sous forme fondue.

Selon un mode de réalisation de la présente invention, ledit agent d'hydrophobisation comprend un mélange des composés de formule (I) et (II), ainsi que le composé de formule (III) suivant :

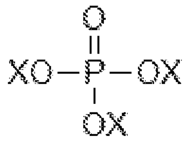

(III)

Selon un autre mode de réalisation de la présente invention, ledit agent d'hydrophobisation comprend un mélange des composés de formule (I) et (II), mais il ne comprend pas de composé de formule (IV) suivant :

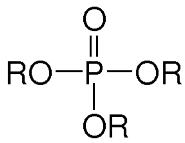

(IV)

Selon un autre mode de réalisation encore de la présente invention, ledit agent d'hydrophobisation consiste en un mélange des composés de formule (I), (II) et (III) tels que décrits ci-dessus. Ainsi, selon ce mode de réalisation, ledit agent d'hydrophobisation ne comprend pas de composés de formule (IV) tel que décrit ci-dessus.

Selon un mode de réalisation, les composés (I), (II) et (III) se trouvent sous leur forme acide.
Selon ce mode de réalisation, le groupe X dans les composés de formule (I), (II) et (III) représente H et les dits composés présentent les formules suivantes :

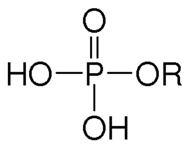

(I')

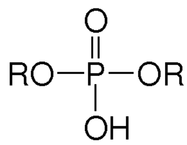

(II')

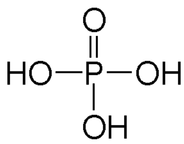

(III') ou acide phosphorique

Selon un autre mode de réalisation, les composés (I), (II) et (III) se trouvent sous forme neutralisée, ou autrement dit, sous forme de sels de phosphate.

Un cation est susceptible de se lier aux atomes d'oxygène du composé (II), ce qui conduit à un composé ionique $R_2PO_4^-$, $M^+$, insoluble dans l'eau aux conditions standard de température et de pression.
Deux cations sont susceptibles de se lier aux atomes d'oxygène du composé (I), ce qui conduit à un composé ionique $RPO_4^{2-}$, 2 $M^+$, insoluble dans l'eau aux conditions standard de température et de pression.

Trois cations sont susceptibles de se lier aux atomes d'oxygène du composé (III), ce qui conduit à un composé ionique $PO_4^{3-}$, 3 $M^+$.

Lorsque les composés constitutifs de l'agent d'hydrophobisation selon l'invention sont sous forme neutralisée, M représente un cation monovalent, divalent ou trivalent. M est par exemple choisi parmi l'ion potassium, l'ion sodium, l'ion lithium, l'ion calcium, l'ion magnésium ou un mélange de ces ions. M peut également être une amine primaire, secondaire ou tertiaire.

Selon un autre mode de réalisation de la présente invention, ledit agent d'hydrophobisation consiste en, en % en poids par rapport au poids total de l'agent d'hydrophobisation :

- de 10 à 50 % en poids de composés de formule (I) et
- de 50 à 90 % en poids de composés de formule (II).

Selon un autre mode de réalisation de la présente invention, ledit agent d'hydrophobisation consiste en, en % en poids par rapport au poids total de l'agent d'hydrophobisation :

- de 10 à 50 % en poids de composés de formule (I),
- de 50 à 90 % en poids de composés de formule (II) et
- de 0,01 à 4 % en poids de composés de formule (III)

L'agent d'hydrophobisation selon l'invention peut être obtenu par des méthodes connues de l'homme du métier.

Selon un mode de réalisation de la présente invention, ledit agent est obtenu par réaction de l'anhydride phosphorique ($P_2O_5$) avec un alcool de formule (V) :

ROH (V)

dans laquelle R représente $C_nH_{2n+1}$ où n représente un nombre entier qui varie entre 6 et 40, le groupe $C_nH_{2n+1}$ étant ramifié, éventuellement cyclique, non aromatique.

Selon un mode de réalisation de l'invention, l'alcool de formule (V) ROH est choisi pour être un alcool primaire linéaire avec une ramification sur la chaîne carbonée. Un tel alcool de type 2-alkyl-1-alcanol est connu sous le nom alcool de Guerbet.

Selon un autre mode de réalisation de l'invention, l'alcool de formule (V) ROH est sélectionné dans le groupe consistant en le 2-tetradecyloctadecanol, le 2-dodecylhexadecanol, le 2-octyldodecanol, le 2-decyltetradecanol, le 2-hexyldecanol et le 2-butyloctanol.

Un objet de la présente invention concerne le procédé de préparation de l'agent d'hydrophobisation de l'invention tel que décrit ci-dessus.

Plus précisément, l'invention concerne le procédé de préparation d'un agent d'hydrophobisation tel que défini ci-dessus, ledit procédé comprenant une étape de réaction de l'anhydride phosphorique ($P_2O_5$) avec un alcool de formule (V) :

ROH (V)

dans laquelle R représente $C_nH_{2n+1}$ où n représente un nombre entier qui varie entre 6 et 40, le groupe $C_nH_{2n+1}$ étant ramifié, éventuellement cyclique, non aromatique.

Ledit procédé de préparation d'un agent d'hydrophobisation selon l'invention peut en outre comprendre une étape supplémentaire de neutralisation, c'est-à-dire d'ajout d'un agent neutralisant.

Selon un mode de réalisation de la présente invention, le procédé de préparation d'un agent d'hydrophobisation comprend une étape de réaction de l'anhydride phosphorique ($P_2O_5$) avec un alcool de formule ROH (V) et un autre alcool de formule R'OH (VI) dans laquelle R' représente un groupe $C_mH_{2m+1}$, linéaire ou ramifié, où m varie de 6 à 60.

Selon ce mode de réalisation, on obtient un agent d'hydrophobisation qui comprend un mélange :

- de composés de formule (I) et (II) décrites ci-dessus, $X_2PO_4R$ et $XPO_4R_2$, dans lesquelles R représente $C_nH_{2n+1}$ où n représente un nombre entier qui varie entre 6 et 40, le groupe $C_nH_{2n+1}$ étant ramifié, éventuellement cyclique, non aromatique, et dans lesquelles X représente H ou M,
- de composés $H_2PO_4R'$ et $HPO_4R'_2$, dans lesquelles R' représente H ou un groupe $C_mH_{2m+1}$, linéaire ou ramifié, où m varie de 6 à 60, et
- de composé $HPO_4RR'$, dans lesquels R et R' sont tels que ci-dessus définis.

Les composés décrits ci-dessus peuvent ensuite être neutralisés et ainsi se trouver sous forme acide ou neutralisée (partiellement ou totalement).

Un autre objet de la présente invention concerne le procédé de préparation de particules de matière minérale traitées en surface, comprenant les étapes consistant à :

a) on dispose d'un agent d'hydrophobisation de particules de matière minérale selon l'invention,
b) on dispose de particules de matière minérale choisies dans le groupe consistant en le talc, le dioxyde de titane, le mica, le gypse, l'alumine, le kaolin, la magnésie, la chaux et un mélange d'au moins deux de ces matières minérales, et
c) on met en contact les particules de matière minérale de l'étape b) avec l'agent d'hydrophobisation de l'étape a).

Un tel procédé est avantageux en ce qu'il permet de disposer de particules de matière minérale traitées, c'est-à-dire qui présentent une surface hydrophobe, directement utilisable pour le formulateur.
En effet, pour disposer de particules de matière minérale compatibles avec les polymères hydrophobes (PE ou PP par exemple), le formulateur doit ajouter un agent d'hydrophobisation dans sa formulation. Cet agent est, dans certains cas, à l'état de cire à température ambiante et doit, par conséquent, être fondu avant utilisation.
Disposer de particules de matière minérale traitées permet de réduire le temps de préparation pour le formulateur.
Selon l'étape a) du procédé, on dispose d'un agent d'hydrophobisation de particules de matière minérale selon l'invention.
Selon l'étape b) du procédé, on dispose de particules de matière minérale sélectionnées dans le groupe consistant en le talc, le dioxyde de titane, le gypse, le noir de carbone, le mica, l'alumine, le kaolin, la magnésie, la chaux et un mélange d'au moins deux de ces matières minérales.
Ces particules peuvent se trouver seules ou en mélange avec d'autres particules de matière minérale.
Selon un mode de réalisation de la présente invention, lesdites particules de matière minérale se trouvent sous forme sèche ou pulvérulente, c'est-à-dire sous forme de poudre.
Par « sèche », on entend des particules de matière minérale ayant une teneur en humidité de surface totale inférieure à 0,5 % en poids, par exemple inférieure à 0,2 % en poids ou inférieure à 0,1 % en poids, par rapport au poids total de particules de matière minérale.
Le terme « poudre », tel qu'il est utilisé dans la présente invention, couvre les poudres minérales solides d'au moins 90 % en poids de matière minérale inorganique, par rapport au poids total de la poudre.
Selon un autre mode de réalisation de la présente invention, lesdites particules de matière minérale se trouvent sous forme d'une suspension aqueuse (« slurry » en anglais).
Selon la présente invention, le terme « suspension » signifie une suspension aqueuse qui comprend des solides insolubles et facultativement au moins un additif.
Dans le cadre de la présente invention, il peut être nécessaire de soumettre la matière minérale à un processus de broyage avant la mise en contact des particules avec l'agent d'hydrophobisation, selon l'étape c) du procédé de la présente invention, ce afin d'obtenir des particules de matière minérale de dimension souhaitée. Cette étape de broyage peut être effectuée au moyen de tout dispositif classique de broyage connu de l'homme du métier.
Il peut également s'avérer nécessaire de sécher les particules de matière minérale avant ou pendant la mise en contact des particules avec l'agent d'hydrophobisation, selon l'étape c) du procédé de la présente invention, de manière à obtenir des particules sous la forme d'une poudre.
Dans le cadre de la présente invention, il peut être nécessaire de chauffer l'agent d'hydrophobisation afin d'obtenir un agent d'hydrophobisation à l'état fondu, cette étape de chauffe ayant lieu avant l'étape c) de mise en contact avec les particules de matière minérale et à une température en lien avec la température de changement de phase de l'agent d'hydrophobisation. L'agent d'hydrophobisation peut être chauffé à une température d'au moins 50°C, par exemple d'au moins 75°C, ou comprise entre 50 et 120°C ou entre 70 et 100°C. On obtient ainsi ledit agent d'hydrophobisation sous forme fondue.
Selon l'étape c) du procédé, on met en contact les particules de matière minérale de l'étape b) avec l'agent d'hydrophobisation de l'étape a).
La mise en contact des particules de matière minérale avec l'agent d'hydrophobisation selon l'invention conduit à rendre plus hydrophobe la surface des particules et conduit alors à des particules traitées en surface. Les particules qui en résultent peuvent alors être utilisées comme charge dans une variété d'applications, par exemple dans des compositions thermoplastiques. Un tel traitement de surface des particules notamment permet de résoudre le problème des incompatibilités avec les polymères hydrophobes (PP et PE par exemple) constituant les compositions thermoplastiques.
Dans le procédé de la présente invention, la mise en contact des particules de matière minérale avec l'agent d'hydrophobisation, selon l'étape c), est par exemple réalisée par mélange des particules avec l'agent d'hydrophobisation.
Par « mélange » au sens de la présente invention, on entend tout procédé classique de mélange connu de l'homme du métier. Le mélange est de préférence effectué sous agitation continue afin que l'ensemble des particules de matière minérale, de façon égale, soit mis en contact avec l'agent d'hydrophobisation.
La mise en contact des particules et de l'agent d'hydrophobisation selon l'étape c) peut avoir lieu à température

ambiante ou à une température supérieure à la température ambiante.

Par exemple, l'étape c) peut avoir lieu à une température ajustée, de manière à ce que l'agent d'hydrophobisation soit à l'état liquide ou fondu. La température de mise en contact des particules à hydrophobiser avec l'agent selon l'invention peut résulter du cisaillement du dispositif de mélange utilisé ou, alternativement, d'une source externe, ou encore d'une combinaison des deux.

Un autre objet de la présente invention concerne les particules de matière minérale traitées en surface obtenues par le procédé de l'invention.

Un autre objet de la présente invention encore consiste en une composition homogène, comprenant un agent d'hydrophobisation de particules de matière minérale selon l'invention, des particules de matière minérale sélectionnées dans le groupe consistant en le talc, le dioxyde de titane, le mica, l'alumine, le gypse, le kaolin, la magnésie, la chaux et un mélange d'au moins deux de ces matières minérales, et au moins un autre composant, par exemple de type résine polymérique.

Un autre objet de la présente invention encore consiste en une composition homogène, comprenant des particules de matière minérale traitées en surface selon la présente invention, et au moins un autre constituant, par exemple de type résine polymérique.

Selon un mode de réalisation de l'invention, la composition homogène selon l'invention, comprend :

- de 50 à 99 %, par exemple de 60 à 99 %, en poids desdites particules de matière minérale traitées, et
- de 1 à 50 %, par exemple de 1 à 40 %, en poids de ladite résine polymérique.

Un autre objet de la présente invention concerne l'utilisation d'un agent d'hydrophobisation de particules de matière minérale selon l'invention, pour traiter en surface des particules de matière minérale.

## EXEMPLES

### <u>Exemple 1</u>

Cet exemple a pour objet d'illustrer la préparation de huit agents d'hydrophobisation par réaction de l'anhydride phosphorique avec un alcool de type chaîne alkyle linéaire (hors invention) ou chaîne alkyle ramifiée (invention), les chaînes alkyles étant non cycliques et non aromatiques.

La réaction permet d'obtenir un mélange des composés mono-ester et di-ester phosphoriques.

<u>Exemple de préparation d'un agent d'hydrophobisation selon l'invention, constitué d'un mélange de composés de formule (I) et (II) dans lesquels R représente une chaîne alkyle 2-tétradecyloctadecanyl</u>

200 g d'Isofol® 32 (SASOL) sont disposés dans un bécher de 400 mL muni d'un barreau magnétique destiné à l'agitation. On chauffe à 70°C.

On ajoute à l'aide d'une spatule, progressivement pendant 1 heure, 30,4 g d'anhydride phosphorique ($P_2O_5$). La température est maintenue entre 70 et 80°C pendant cette étape d'ajout.

On cuit 4 heures sous agitation à une température d'environ 65°C, jusqu'à ce que tous les grains de $P_2O_5$ aient disparu. On obtient un liquide brun homogène.

Le pourcentage en poids de monoesters phosphoriques, de diesters phosphoriques, et d'acide phosphorique, ainsi que le ratio molaire mono-ester : di-ester phosphorique de l'agent d'hydrophobisation ainsi obtenu, sont déterminés par dosage au moyen d'un potentiomètre (DL20 Mettler).

On procède tout d'abord à la préparation de l'échantillon.

0,3 g d'agent d'hydrophobisation est ajouté, sous agitation magnétique, à un mélange chauffé de solvants (50°C $< t <$ 60°C), constitué de 50 mL d'éthylméthylcétone (MEK) et 70 mL d'isopropanol. Au moment du dosage, 30 mL d'eau bipermutée, chauffée à 60°C, sont ajoutés.

Le dosage est réalisé par l'utilisation de soude 0,1 N. Au cours du dosage, l'échantillon est maintenu sous agitation sur le potentiomètre et à une température comprise entre 50°C et 60°C au moyen d'une plaque chauffante.

On obtient deux points équivalents correspondants à deux volumes V1 et V2*.

On ajoute ensuite une solution d'acide chlorhydrioque 0,1 N jusqu'à obtenir un pH de 10,6.

On ajoute enfin 15 mL de solution $CaCl_2$ à 10 %.

On dose par la soude 0,1 N. On obtient le point équivalent correspondant au volume V3.

Les pourcentages en poids de monoesters phosphoriques, de diesters phosphoriques et d'acide phophorique dans le produit obtenu peuvent être déterminés au moyen des formules ci-dessous :

$$\% \, monoester = \frac{(V2 - V3)\, Mmono\, T}{1000\, pe}$$

$$\% \, diester = \frac{(V1 - V2)\, Mdi\, T}{1000\, pe}$$

$$\% \, H_3PO_4 = \frac{V3\, Mh\, T}{1000\, pe}$$

Selon lesquelles :

T : titre de la solution de soude 0.1N
V1 et V3 : donnés par le dosage
V2 = V2* (donné par le dosage) -V
V : déterminé par dosage par la soude 0,1 N du mélange de solvant
pe : prise d'essai en g
Mmono : masse moléculaire du monoester
Mdi : masse moléculaire du diester
Mh : masse moléculaire de l'acide phosphorique (98 g/mol)

Les caractéristiques des agents d'hydrophobisation ainsi préparés sont données dans le tableau 1 ci-dessous :

Tableau 1

| **Essais** | **1-1** | **1-2** | **1-3** | **1-4** |
|---|---|---|---|---|
| | HI | INV | HI | HI |
| n | 12 | 12 | 16-18 | 16-18 |
| Structure $C_nH_{2n}$ | linéaire | ramifié | linéaire | linéaire hydrolysé |
| % monoester | 13,2 | 19,4 | 23,2 | 24 |
| % diester | 86,6 | 80,4 | 76,2 | 74 |
| % $H_3PO_4$ | 0,2 | 0,2 | 0,6 | 2 |
| Ratio molaire mono : diester | 1 : 4 | 1 : 4 | 1 : 2 | 1 : 2 |
| | | | | |
| **Essais** | **1-5** | **1-6** | **1-7** | **1-8** |
| | INV | HI | INV | INV |
| n | 20 | 28 | 28 | 32 |
| Structure $C_nH_{2n}$ | ramifié | linéaire | ramifié | ramifié |
| % monoester | 18,2 | 37,3 | 19,7 | 19,5 |
| % diester | 81,8 | 61,1 | 80,3 | 80,6 |
| % $H_3PO_4$ | nd | 1,6 | nd | nd |
| Ratio molaire mono : diester | 1 : 2,4 | 1 : 14 | 1 : 14 | 1 : 2,3 |
| nd : non détectable<br>Essai 1-2 : R représente le 2-butyloctanyl<br>Essai 1-5 : R représente le 2-octyldodecanyl<br>Essai 1-7 : R représente le 2-dodecylhexadecanyl<br>Essai 1-8 : R représente le 2-tetradecyloctadecanyl | | | | |

**Exemple 2**

Cet exemple, hors invention, a pour objet d'illustrer la préparation des particules de $CaCO_3$ traitées en surface au moyen d'un agent d'hydrophobisation tel que décrit aux essais 1-1 et 1-2 de l'exemple 1 ci-dessus.
Plus précisément, un mélangeur du type Guédu de type 4,5NO est préchauffé à 80°C. 1 000 g de $CaCO_3$ (Millicarb® Omya, $d_{50}$ = 3 μm) sont ajoutés au mélangeur. On met ensuite en contact, doucement et sous agitation, 11,4 g de l'agent d'hydrophobisation selon l'essai 1-1 (HI) ou selon l'essai 1-2 (INV) dans le mélangeur avec les particules de $CaCO_3$. Si nécessaire, l'agent d'hydrophobisation est préalablement fondu à 70°C avant d'être ajouté dans le mélangeur.
Le mélange est réalisé pendant 15 minutes sous agitation minimale.
On obtient des particules de $CaCO_3$ traitées en surface.

**Exemple 3**

Cet exemple, hors invention, a pour objet d'illustrer la préparation de granulés de composition thermoplastique, à partir des particules de carbonate de calcium et en présence d'agents d'hydrophobisation selon les essais 1-1 à 1-8 de l'exemple 1 ci-dessus.
On introduit le mélange suivant dans le récipient préchauffé à 140°C d'un mélangeur Guédu de type 4,5NO :

- 875 g de particules de $CaCO_3$ (Millicarb® Omya, $d_{50}$ = 3 μm),
- 10 g d'agent d'hydrophobisation selon les essais 1-1 à 1-8 et
- 115 g d'une résine polymérique constituée à 49,5% en poids de Vestoplast™ 508 (HULS), 49,5 % en poids de Vestoplast™ 408 (HULS), de 0,5 % en poids de Irganox™ (agent de stabilisation thermique Ciba) et 0,5 % en poids de Tinuvin.

Le mélange est réalisé à une température de 140°C et à vitesse maximale (réglage de la vitesse sur la position H, échelle allant de A à H avec H maximum). Le mélange est maintenu pendant 18 minutes.
Dans un second temps, le mélange, réglé sur une vitesse réduite (position A), est maintenu pendant 2 minutes.
Le temps total de malaxage est de 20 minutes.
La pâte ainsi obtenue est étalée à chaud sur une plaque.
Elle est ensuite mise sous forme de granulés (ou agrégats ou pellets) au moyen d'un couteau puis mise au repos pendant 15 heures avant mesure du MFI.
L'indice de fluidité (ou Melt Flow Index) des granulés de composition thermoplastique est mesuré selon la norme ASTM D 1238 par introduction de granulés dans le siphon d'un plastomètre de marque ZWICK de type 4105. Il correspond à la quantité de composition thermoplastique sous forme de granulés, exprimé en grammes pour 10 minutes, qui s'écoule à la température de 150°C (comprise dans l'intervalle limité par les températures de ramollissement et de transformation) sous une charge donnée normalisée (5 kg en l'espèce) au travers d'une filière de diamètre déterminé (environ 2,1 mm) pendant 10 minutes.

Tableau 2

| **Essais** | **3-1** | **3-2** | **3-3** | **3-4** |
|---|---|---|---|---|
| | HI | INV | HI | HI |
| n | 12 | 12 | 16-18 | 16-18 |
| Structure $C_nH_{2n}$ | linéaire | ramifié | linéaire | linéaire hydroxylé |
| MFI (150°C - 5 kg) | 2.08 | 6.9 | 2.13 | 3.19 |
| | | | | |
| **Essais** | **3-5** | **3-6** | **3-7** | **3-8** |
| | INV | HI | INV | INV |
| n | 20 | 28 | 28 | 32 |
| Structure $C_nH_{2n}$ | ramifié | linéaire | ramifié | ramifié |
| MFI (150°C - 5 kg) | 9.64 | 8.68 | 9.49 | 11.37 |

**Exemple 4**

Cet exemple, hors invention, a pour objet d'illustrer la préparation de granulés de composition thermoplastique, à partir des particules de carbonate de calcium traitées en surface au moyen d'un agent d'hydrophobisation telles qu'obtenues selon l'exemple 2.

On introduit le mélange suivant dans le récipient préchauffé à 140°C d'un malaxeur de type Guédu de type 4,5NO:

- 885 g de particules de $CaCO_3$ (Millicarb® Omya, $d_{50}$ = 3 μm) traitées en surface selon l'exemple 2 et
- 115 g d'une résine polymérique constituée à 49,5 % en poids de Vestoplast™ 508 (HULS), 49,5 % en poids de Vestoplast™ 408 (HULS), de 0,5 % en poids de Irganox™ (agent de stabilisation thermique Ciba) et 0,5 % en poids de Tinuvin.

Le MFI est ici mesuré sous 5 kg à 150°C.

Tableau 3

| **Essais** | **4-1** | **4-2** | **4-3** |
|---|---|---|---|
| | HI | INV | INV |
| n | 12 | 12 | 20 |
| Structure $C_nH_{2n}$ | linéaire | ramifié | ramifié |
| MFI (150°C - 5 kg) | 2,3 | 4,9 | 10,7 |

**Exemple 5**

Cet exemple a pour objet d'illustrer la préparation selon l'invention de particules de dioxyde de titane traitées en surface au moyen d'un agent d'hydrophobisation, tel que décrit aux essais 1-6 et 1-7 de l'exemple 1 ci-dessus.

Plus précisément, un mélangeur du type Vorwerk est préchauffé à 100°C. 500 g de $TiO_2$ (Kronos® 2220) sont ajoutés au mélangeur. On met ensuite en contact, doucement et sous agitation, 7,14 g de l'agent d'hydrophobisation selon l'essai 1-6 (HI) ou selon l'essai 1-7 (INV) dans le mélangeur avec les particules de $TiO_2$. Si nécessaire, l'agent d'hydrophobisation est préalablement fondu à 70°C avant d'être ajouté dans le mélangeur.

Le mélange est réalisé pendant 15 minutes sous agitation minimale.

On obtient des particules de $TiO_2$ traitées en surface.

**Exemple 6**

Cet exemple a pour objet d'illustrer la préparation selon l'invention de granulés de composition thermoplastique, à partir des particules de $TiO_2$ traitées en surface au moyen d'un agent d'hydrophobisation telles qu'obtenues selon l'exemple 5.

On introduit le mélange suivant dans un malaxeur RMC Guittard préchauffé à 170°C :

- 284 g de particules de $TiO_2$ traitées en surface selon l'exemple 5 et
- 116 g d'une résine polymérique constituée de 110,4 g de polyéthylène basse densité (Repsol), 3,2 g de stéarate de zinc et 2,4 g d'un antioxydant.

Le mélange est réalisé pendant 20 minutes à 160°C (sous agitation lente pendant 5 minutes puis sous agitation rapide pendant 15 minutes).

Le MFI est ici mesuré sous 5 kg à 190°C.

Tableau 4

| **Essais** | **6-1** | **6-2** |
|---|---|---|
| | HI | INV |

(suite)

| **Essais** | **6-1** | **6-2** |
|---|---|---|
| n | 28 | 28 |
| Structure $C_nH_{2n}$ | linéaire | ramifié |
| MFI (150°C - 5 kg) | 16,0 | 17,0 |

## Revendications

1. Procédé de préparation de particules de matière minérale traitées en surface, comprenant les étapes consistant à :

    a) on dispose d'un agent d'hydrophobisation de particules de matière minérale, comprenant un mélange des composés de formule (I) et (II) suivants :

    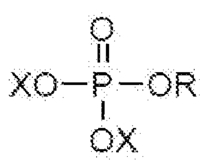

    (I)

    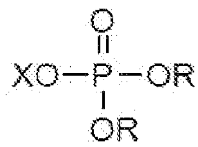

    (II)

    dans lesquelles :

        R représente $C_nH_{2n+1}$ où n représente un nombre entier qui varie entre 6 et 40, le groupe $C_nH_{2n+1}$ étant ramifié, éventuellement cyclique, non aromatique,
        X représente H ou M, et
        M représente un cation monovalent, divalent ou trivalent ;

    b) on dispose de particules de matière minérale choisies dans le groupe consistant en le talc, le dioxyde de titane, le gypse, le mica, l'alumine, le kaolin, la magnésie, la chaux et un mélange d'au moins deux de ces matières minérales, et
    c) on met en contact les particules de matière minérale de l'étape b) avec l'agent d'hydrophobisation de l'étape a).

2. Procédé selon la revendication 1, selon lequel l'agent d'hydrophobisation est tel que le ratio molaire entre le composé de formule (I) et le composé de formule (II) varie entre 1:100 et 10:1.

3. Procédé selon la revendication 1 ou 2, selon lequel l'agent d'hydrophobisation est tel que le nombre n du groupement R dans les formules (I) et (II) varie entre 12 et 32.

4. Procédé selon l'une quelconque des revendications précédentes, selon lequel l'agent d'hydrophobisation est tel que R est choisi dans le groupe consistant en le 2-butyloctanyl, le 2-hexyldecanyl, le 2-octyldodecanyl, le 2-decyltetradecanyl, le 2-dodecylhexadecanyl et le 2-tetradecyloctadecanyl.

5. Procédé selon l'une quelconque des revendications précédentes, selon lequel l'agent d'hydrophobisation est tel qu'il comprend en outre un composé de formule (III) :

    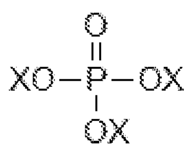

    (III)

6. Procédé selon l'une quelconque des revendications précédentes, selon lequel l'agent d'hydrophobisation est tel qu'il ne comprend pas de composé de formule (IV) suivant :

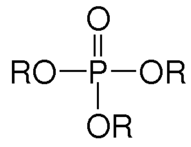

(IV)

7. Particules de matière minérale traitées en surface obtenues par le procédé de l'une des revendication 1-6, lesdites particules de matière minérale étant choisies dans le groupe consistant en le talc, le dioxyde de titane, le gypse, le mica, l'alumine, le kaolin, la magnésie, la chaux et un mélange d'au moins deux de ces matières minérales.

8. Utilisation d'un agent d'hydrophobisation de particules de matière minérale, comprenant un mélange des composés de formule (I) et (II) suivants :

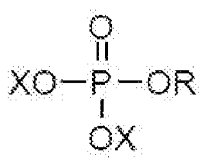

(I)

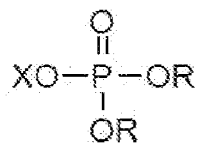

(II)

dans lesquelles :

R représente $C_nH_{2n+1}$ où n représente un nombre entier qui varie entre 6 et 40, le groupe $C_nH_{2n+1}$ étant ramifié, éventuellement cyclique, non aromatique,
X représente H ou M, et
M représente un cation monovalent, divalent ou trivalent,

pour traiter en surface des particules de matière minérale.

9. Utilisation selon la revendication 8, selon laquelle l'agent d'hydrophobisation est tel que le nombre n du groupement R dans les formules (I) et (II) varie entre 12 et 32.

10. Utilisation selon l'une quelconque des revendications 8-9, selon laquelle l'agent d'hydrophobisation est tel que R est choisi dans le groupe consistant en le 2-butyloctanyl, le 2-hexyldecanyl, le 2-octyldodecanyl, le 2-decyltetradecanyl, le 2-dodecylhexadecanyl et le 2-tetradecyloctadecanyl.

## Patentansprüche

1. Verfahren zur Herstellung von Mineralstoffpartikeln, die eine Oberflächenbehandlung erfahren haben, wobei es die folgenden Schritte umfasst:

a) Bereitstellen eines Mittels zur Hydrophobierung von Mineralstoffpartikeln, welches eine Mischung aus Verbindungen nach den folgenden Formeln (I) und (II) umfasst:

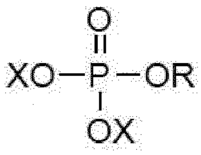

(I)

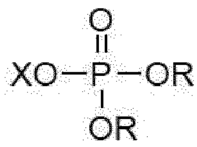

(II)

wobei:

R für $C_nH_{2n+1}$ steht, wobei n für eine ganze Zahl steht, die Werte von 6 bis 40 annehmen kann, wobei die Gruppe $C_nH_{2n+1}$ verzweigt, möglicherweise zyklisch, nichtaromatisch ist,
X für H oder M steht, und
M für ein einwertiges, zweiwertiges oder dreiwertiges Kation steht;

b) Bereitstellen von Mineralstoffpartikeln, die aus der Gruppe ausgewählt sind, welche aus Talkum, Titandioxid, Gips, Glimmer, Aluminiumoxid, Kaolin, Magnesia, Baukalk und einer Mischung aus mindestens zweien dieser Mineralstoffe besteht, und
c) Inkontaktbringen der Mineralstoffpartikel des Schrottes b) mit dem Hydrophobierungsmittel des Schrottes a).

**2.** Verfahren nach Anspruch 1, gemäß welchem das Hydrophobierungsmittel derart beschaffen ist, dass das Molverhältnis zwischen der Verbindung nach Formel (I) und der Verbindung nach Formel (II) Werte von 1:100 bis 10:1 annehmen kann.

**3.** Verfahren nach Anspruch 1 oder 2, gemäß welchem das Hydrophobierungsmittel derart beschaffen ist, dass die Anzahl n der Gruppe R in den Formeln (I) und (II) Werte von 12 bis 32 annehmen kann.

**4.** Verfahren nach einem beliebigen der vorhergehenden Ansprüche, gemäß welchem das Hydrophobierungsmittel derart beschaffen ist, dass R aus der Gruppe ausgewählt ist, die aus 2-Butyloctanyl, 2-Hexyldecanyl, 2-Octyldodecanyl, 2-Decyltetradecanyl, 2-Dodecylhexadecanyl und 2-Tetradecyloctadecanyl besteht.

**5.** Verfahren nach einem beliebigen der vorherge
henden Ansprüche, gemäß welchem das Hydrophobierungsmittel derart beschaffen ist, dass es darüber hinaus eine Verbindung nach Formel (III) umfasst:

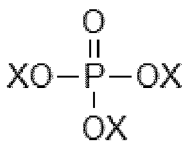

(III)

**6.** Verfahren nach einem beliebigen der vorhergehenden Ansprüche, gemäß welchem das Hydrophobierungsmittel derart beschaffen ist, dass es keinerlei Verbindung nach der folgenden Formel (IV) umfasst:

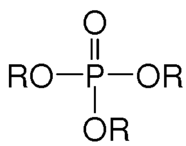

(IV)

**7.** Mineralstoffpartikel, die eine Oberflächenbehandlung erfahren haben, wobei sie mittels des Verfahrens eines der Ansprüche 1 bis 6 hergestellt wurden, wobei die Mineralstoffpartikel aus der Gruppe ausgewählt sind, welche aus Talkum, Titandioxid, Gips, Glimmer, Aluminiumoxid, Kaolin, Magnesia, Baukalk und einer Mischung aus mindestens

zweien dieser Mineralstoffe besteht.

**8.** Verwendung eines Mittels zur Hydrophobierung von Mineralstoffpartikeln, welches eine Mischung aus Verbindungen nach den folgenden Formeln (I) und (II) umfasst:

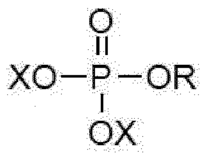

(I)

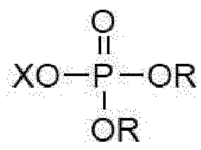

(II)

wobei:

R für $C_nH_{2n+1}$ steht, wobei n für eine ganze Zahl steht, die Werte von 6 bis 40 annehmen kann, wobei die Gruppe $C_nH_{2n+1}$ verzweigt, möglicherweise zyklisch, nichtaromatisch ist,
X für H oder M steht, und
M für ein einwertiges, zweiwertiges oder dreiwertiges Kation steht,

um Mineralstoffpartikel einer Oberflächenbehandlung zu unterziehen.

**9.** Verwendung nach Anspruch 8, gemäß welcher das Hydrophobierungsmittel derart beschaffen ist, dass die Anzahl n der Gruppe R in den Formeln (I) und (II) Werte von 12 bis 32 annehmen kann.

**10.** Verwendung nach einem beliebigen der Ansprüche 8 bis 9, gemäß welcher das Hydrophobierungsmittel derart beschaffen ist, dass R aus der Gruppe ausgewählt ist, die aus 2-Butyloctanyl, 2-Hexyldecanyl, 2-Octyldodecanyl, 2-Decyltetradecanyl, 2-Dodecylhexadecanyl und 2-Tetradecyloctadecanyl besteht.

**Claims**

**1.** A process for preparing surface-treated mineral matter particles comprising the steps consisting of:

a) making available a mineral matter particle hydrophobization agent comprising a mixture of compounds of formulae (I) and (II):

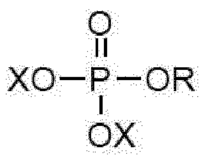

(I)

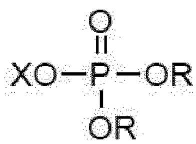

(II)

in which:

R represents $C_nH_{2n+1}$ where n is an integer that varies between 6 and 40, the group $C_nH_{2n+1}$ being branched, optionally cyclic, non-aromatic,
X represents H or M, and
M represents a monovalent, divalent or trivalent cation,

b) making available particles of mineral matter selected in the group consisting of talc, titanium dioxide, gypsum, mica, alumina, kaolin, magnesia, lime and a mixture of at least two of these minerals, and
c) bringing into contact the mineral matter particles from step b) with the hydrophobization agent from step a).

**2.** Process according to claim 1, wherein hydrophobization agent is such that the molar ratio between the compound

of formula (I) and the compound of formula (II) varies between 1:100 and 10:1.

3. Process according to claim 1 or 2, wherein the hydrophobization agent is such that the number n of the R group in formulae (I) and (II) ranges from 12 to 32.

4. Process according to any one of the preceding claims, wherein the hydrophobization agent is such that R is selected from the group consisting of 2-butyloctanyl, 2-hexyldecanyl, 2-octyldodecanyl, 2-decyltetradecanyl, 2-dodecylhexadecanyl and 2-tetradecyloctadecanyl.

5. Process according to any of the preceding claims, wherein the hydrophobization agent further comprises a compound of formula (III):

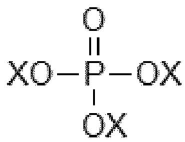

(III)

6. Process according to any one of the preceding claims, wherein the hydrophobization agent does not comprise a compound of formula (IV):

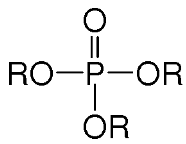

(IV)

7. Surface-treated mineral matter particles obtained by the method of any one of claims 1 to 6, said mineral matter particles being selected from the group consisting of talc, titanium dioxide, gypsum, mica, alumina, kaolin, magnesia, lime and a mixture of at least two of these minerals.

8. Use of a mineral matter particle hydrophobization agent comprising a mixture of compounds of formulae (I) and (II):

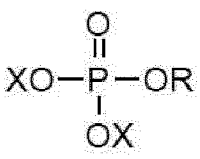

(I)

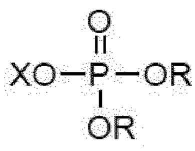

(II)

in which:

R represents $C_nH_{2n+1}$ where n is an integer that varies between 6 and 40, the group $C_nH_{2n+1}$ being branched, optionally cyclic, non-aromatic,
X represents H or M, and
M represents a monovalent, divalent or trivalent cation,

for the surface treatment of mineral matter particles.

9. Use according to claim 8, wherein the hydrophobization agent is such that the number n of R group in formulae (I) and (II) ranges from 12 to 32.

**10.** Use according to any one of claims 8 to 9, wherein the hydrophobization agent is such that R is selected in the group consisting of 2-butyloctanyl, 2-hexyldecanyl, 2-octyldodecanyl, 2-decyltetradecanyl, 2-dodecylhexadecanyl and 2-tetradecyloctadecanyl.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9517441 A
- US 5008296 A
- EP 0998522 A
- US 4698372 A
- US 4350655 A
- EP 2546410 A
- FR 2582310
- FR 2602236
- FR 2671555
- FR 2671556
- EP 0401871 B1


### Littérature non-brevet citée dans la description


- **SUPAPHOL et al.** *Colloids and surfaces,* 2006, vol. A 275, 114-125